Europäisches Patentamt

(19) European Patent Office

Office européen des brevets

(11) Numéro de publication: **0 055 193**
A2

## (12) DEMANDE DE BREVET EUROPEEN

(21) Numéro de dépôt: **81420176.0**

(22) Date de dépôt: **25.11.81**

(51) Int. Cl.³: **B 65 G 53/40**, B 65 D 88/68

(30) Priorité: **19.12.80 FR 8027565**

(43) Date de publication de la demande: **30.06.82**
**Bulletin 82/26**

(84) Etats contractants désignés: **AT CH DE GB IT LI LU NL SE**

(71) Demandeur: **ETABLISSEMENTS AUBRIOT, F-01390 Saint Jean de Thurigneux (FR)**

(72) Inventeur: **Aubriot, Jean Pierre, Saint Jean De Thurigneux (Ain) (FR)**

(74) Mandataire: **Maureau, Pierre, Cabinet GERMAIN & MAUREAU Le Britannia - Tour C 20, Boulevard E. Déruelle, F-69003 Lyon (FR)**

(54) **Transporteur pneumatique à béton, mortier ou autres produits pâteux ou granuleux.**

㉟ Ce transporteur pneumatique à béton, mortier ou autres comporte une cuve (2) d'axe vertical, à fond conique (3), avec un orifice supérieur de remplissage (4) fermé par un couvercle (5), et un orifice inférieur de vidage (6), auquel est raccordé le départ (8) d'une canalisation souple de transport du produit, des canalisations d'alimentation en air comprimé étant en outre prévues. Un agitateur rotatif (13), comprenant des bras (16) fixés à un moyeu (14) porté par un arbre horizontal (15), est disposé diamétralement dans la partie conique (3) de la cuve (2). Les bras (16) de cet agitateur (13), ou du moins une partie de ces bras, ont une disposition inclinée par rapport à l'axe de leur moyeu support (14), de manière à former avec cet axe un angle (α) inférieur à 90°.

ACTORUM AG

La présente invention concerne un transporteur pneumatique à béton, mortier ou autres produits pâteux ou granuleux, du type comportant une cuve d'axe vertical à fond conique, un orifice supérieur de remplissage équipé d'un couvercle de fermeture étanche, et un orifice inférieur de vidage du produit auquel est raccordée une canalisation souple de transport, par l'intermédiaire d'un raccord coudé auquel est également raccordée une canalisation d'alimentation en air comprimé, au moins une autre canalisation d'alimentation en air comprimé débouchant dans la partie supérieure de la cuve, et dans lequel est prévu un agitateur rotatif comprenant des bras fixés à un moyeu porté par un arbre horizontal disposé diamétralement dans la partie conique de la cuve, à un niveau compris entre le tiers et les deux tiers de la hauteur de cette partie conique, la longueur des bras étant telle qu'ils frolent, sans risque de la toucher, la paroi du fond conique de la cuve.

Un transporteur pneumatique de ce type est décrit par le brevet français 2 439 151, dans lequel sont aussi prévues les dispositions suivantes :

- Le mouvement de l'agitateur peut être continu ou alternatif, par exemple sur une fraction de tour, auquel cas les bras de l'agitateur sont répartis sur une fraction de circonférence légèrement supérieure à la fraction de tour effectuée par l'agitateur, lors de son fonctionnement.

- L'entraînement de cet agitateur peut être manuel et, dans ce cas, son arbre est muni d'un prolongement extérieur à la cuve et à l'extrémité duquel est calé un levier de manoeuvre ou une manivelle.

- L'entraînement en rotation continue ou alternative dudit agitateur peut aussi être assuré à partir d'un moteur pneumatique, hydraulique, électrique ou thermique.

La présence de l'agitateur et son mode de fonctionnement permettent d'obtenir, lors du vidage de la cuve, que l'écoulement du produit qu'elle contient se fasse d'une manière plus facile et, en particulier, avec réduction des à-coups préjudiciables à l'utilisation de l'appareil. Dans le cas des appareils anciens dépourvus d'un tel agitateur, les à-coups interdisaient de déverser directement le béton dans les banches, car ils risqueraient de les déformer par gonflement ; de même, dans la distribution du mortier en façade, ces à-coups étaient à l'origine de la formation de défauts inacceptables.

Dans la forme d'exécution particulière, décrite et représentée sur le brevet français 2 439 151 déjà cité, les bras de l'agitateur s'étendent radialement, par rapport au moyeu sur lequel ils se trouvent fixés. Il subsiste, dans cette disposition, une certaine imperfection, car les bras ont tendance à "couper en tranches" la masse de béton ou de mortier contenue dans la cuve, plutôt que de réaliser un véritable brassage. En outre, des bras simplement radiaux exercent, par leurs seules extrémités, une action insuffisante près de la paroi du fond conique de la cuve. Il peut en résulter, dans le cas de certains matériaux à transporter, la subsistance de poches d'air, lesquelles sont précisément à l'origine des à-coups signalés plus haut.

L'objet de la présente invention est de perfectionner l'appareil connu par le brevet français 2 439 151, en fournissant une réalisation particulière de l'agitateur rotatif, procurant un brassage plus efficace ainsi qu'un véritable raclage de la paroi conique.

A cet effet, dans le transporteur pneumatique à béton, mortier ou autres produits selon la présente invention, au moins une partie des bras de l'agitateur ont une disposition inclinée par rapport à l'axe de leur moyeu support, de manière à former avec cet axe un angle inférieur à 90°.

Ces bras peuvent être inclinés tous dans le même sens, ce qui conduit à une disposition asymétrique. Ils peuvent aussi posséder des inclinaisons dirigées soit dans un sens, soit dans l'autre, de manière à réaliser un ensemble symétrique. Dans ce dernier cas, tous les bras inclinés sont tournés soit vers le centre de la cuve, soit vers l'extérieur de la cuve.

Avantageusement, l'inclinaison des bras, et notamment des bras les plus proches de la paroi du fond conique de la cuve, correspond sensiblement à l'inclinaison de cette paroi conique, ce qui permet à certains bras d'avoir une position pratiquement tangente à ladite paroi.

De toute façon, l'invention sera bien comprise à l'aide de la description qui suit, en référence au dessin schématique annexé représentant, à titre d'exemples non limitatifs, quelques formes d'exécution de ce transporteur pneumatique à béton, mortier ou autres :

Figure 1 en est une vue de côté, en élévation ;

Figure 2 est une vue en coupe verticale de la cuve de l'appareil selon figure 1, montrant une disposition particulière des bras de l'agitateur ;

Figures 3 et 4 sont des vues en coupe similaires à figure 2, illustrant deux variantes de cet agitateur.

Le transporteur pneumatique à béton, mortier ou autres produits similaires représenté sur le dessin comporte, comme déjà décrit dans le brevet français 2 439 151, une cuve 2 à fond conique 3, présentant un orifice supérieur 4 ou orifice de remplissage équipé d'un couvercle de fermeture étanche 5, et un orifice inférieur 6 de vidage du produit. Cet orifice inférieur 6 est raccordé à la canalisation souple 7 de transport du béton, mortier ou autre produit, au moyen d'un raccord coudé 8.

Une canalisation 9 débouchant dans la partie supérieure de la cuve 2, et reliée par une autre canalisation 11 à une source d'air comprimé, non représentée sur le dessin, permet d'introduire de l'air comprimé dans le haut de la cuve 2. Cette même canalisation d'alimentation en air comprimé 11 est encore reliée par une canalisation 12 au raccord coudé 8, de manière à déboucher dans ce raccord en amont et dans l'axe de sa branche de sortie 8a. On conçoit aisément que l'arrivée d'air comprimé dans la cuve 2 et dans le raccord 8 tend à provoquer l'écoulement du béton dans la canalisation de transport 7.

Il est prévu, dans la cuve 2, un agitateur rotatif 13 constitué par un moyeu 14 porté par un arbre 15, auquel il est lié en rotation et portant lui-même des bras 16. L'arbre 15 est supporté horizontalement par des paliers 17 fixés à la paroi du fond conique 3 de la cuve 2 à un niveau h compris entre le tiers et les deux tiers de la hauteur totale H dudit fond conique 3.

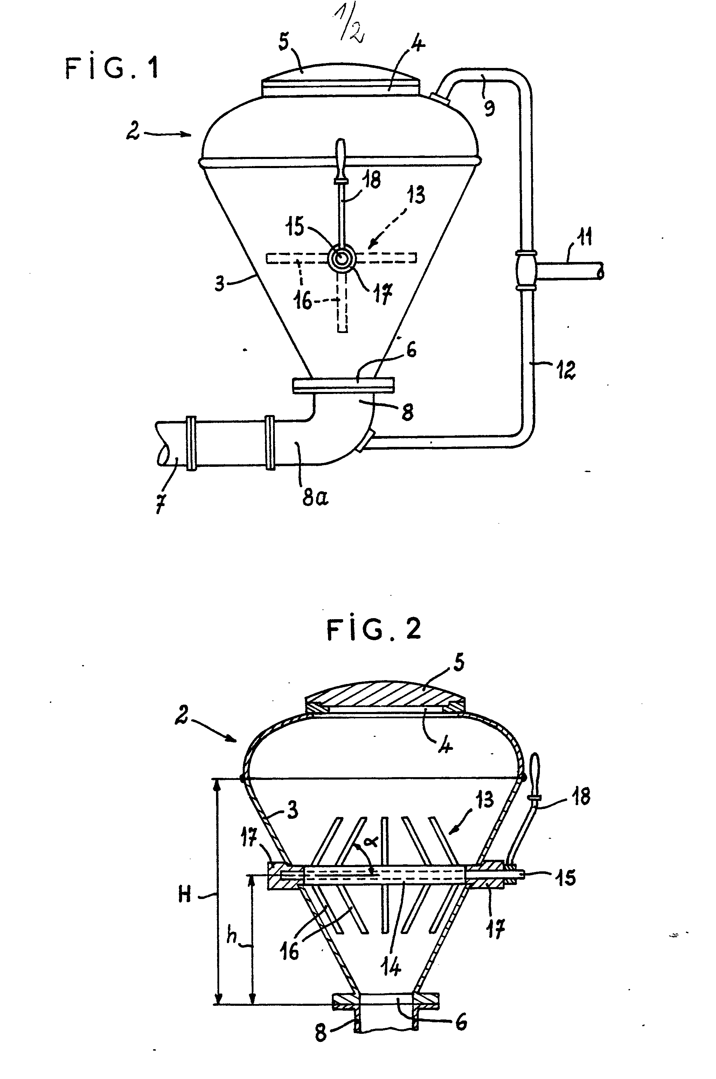

Dans les exemples illustrés par le dessin, les moyens d'entraînement en rotation de l'arbre 15 sont constitués par un levier 18 calé à l'extrémité de l'arbre 15 située à l'extérieur de la cuve 2. La manoeuvre de l'agitateur 13 consiste en un mouvement alternatif dont l'amplitude est d'environ 90°. On comprend aisément que, dans ce cas, il est inutile que le moyeu 14 soit équipé de bras 16 sur toute sa périphérie et qu'il suffit que ces bras soient répartis sur seulement 180°, par exemple en trois rangées comme illustré en pointillés sur la figure 1.

Le levier 18 pourrait être remplacé par une manivelle permettant d'entraîner l'arbre 15 et, par conséquent, l'agitateur 13, en un mouvement continu de rotation et, dans ce cas, le moyeu 14 peut porter quatre rangées de bras 16 au lieu de trois.

Naturellement, on pourrait tout aussi bien prévoir un entraînement de l'agitateur 13 non pas manuel, mais à l'aide d'un moteur pneumatique, hydraulique, électrique ou thermique, et cet entraînement motorisé pourrait faire décrire à l'agitateur 13 soit un mouvement de rotation alternatif sur une fraction de tour, soit un mouvement de rotation continu.

Dans la forme de réalisation représentée sur la figure 2, et conformément à la présente invention, les bras 16 de l'agitateur 13, autres que ceux fixés au centre du moyeu 14, ont une disposition inclinée et forment, avec l'axe de ce moyeu 14, un angle $\alpha$ inférieur à 90°. Les bras 16 situés du côté droit sont inclinés vers la gauche, et d'une manière symétrique, les bras 16 situés du côté gauche sont inclinés vers la droite ; ainsi, tous les bras 16 considérés sont tournés vers le centre de la cuve 2. Il est à noter encore que l'angle d'inclinaison ⍺ des bras 16 est sensiblement égal à celui de la paroi du fond conique 3. Les bras 16 extrêmes s'étendent ainsi le long de ladite paroi.

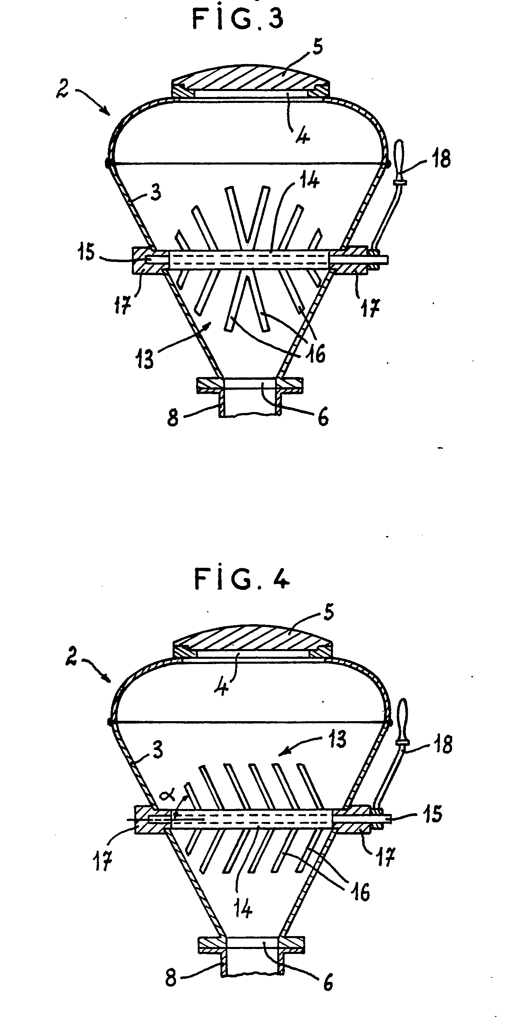

Dans la première variante, illustrée par la figure 3, les bras 16 sont toujours inclinés suivant le principe de la présente invention, mais ils sont tournés vers l'extérieur de la cuve 2. En effet, les bras 16 situés du côté droit sont inclinés vers la droite, et les bras situés du côté gauche sont inclinés vers la gauche. On notera encore qu'ici tous les bras 16 sont inclinés, y compris ceux fixés au centre du moyeu 14.

Alors que les formes d'exécution des figures 2 et 3 constituent l'une et l'autre un agitateur 13 symétrique, la seconde variante, illustrée par la figure 4, correspond à un agitateur 13 asymétrique. Tous les bras 16, quelque soit leur point de fixation sur le moyeu 14, sont en effet inclinés dans le même sens, par exemple tournés du côté opposé au levier de manoeuvre 18.

Le dessin montre, par ailleurs, que les bras inclinés 16 peuvent être tous de même longueur, ou avoir des longueurs inégales, auquel cas les bras les plus proches du centre de la cuve 2 sont les plus longs. Dans tous les cas, la longueur de chaque bras 16 est établie de manière à lui permettre de frôler, sans la toucher, la paroi du fond conique 3 de la cuve 2, lorsque l'agitateur 13 est entraîné en rotation.

Dans les exemples illsutrés par le dessin et qui viennent d'être décrits, l'agitateur 13 est constitué par le moyeu 14 portant les bras 16. Cette disposition facilite le démontage de l'agitateur 13, qui peut être remplacé après usure sans aucune difficulté et sans obligation d'avoir recours à un spécialiste. Les bras 16 ont été représentés comme constitués par des fers plats rectilignes mais ils pourraient tout aussi bien être conformés

0055193

- 6 -

différemment sans sortir du cadre de l'invention ; ils pourraient, par exemple, être réalisés à la manière de pales, vrillées ou non, pour être rendus plus efficaces encore, selon la nature du produit transporté.

Enfin, il n'a pas été représenté, sur le dessin, de moyen de liaison en rotation entre le moyeu 14 et l'arbre 15, mais il est évident que l'on peut prévoir tout moyen connu tel que clavette, vis de blocage ou autre, permettant de préférence un démontage et un remplacement faciles comme déjà indiqué ci-dessus.

## REVENDICATIONS

1. - Transporteur pneumatique à béton, mortier ou autres produits pâteux ou granuleux, du type comportant une cuve d'axe vertical à fond conique, un orifice supérieur de remplissage équipé d'un couvercle de fermeture étanche, et un orifice inférieur de vidage du produit auquel est raccordée une canalisation souple de transport, par l'intermédiaire d'un raccord coudé auquel est également raccordée une canalisation d'alimentation en air comprimé, au moins une autre canalisation d'alimentation en air comprimé débouchant dans la partie supérieure de la cuve, et dans lequel est prévu un agitateur rotatif comprenant des bras fixés à un moyeu porté par un arbre horizontal disposé diamétralement dans la partie conique de la cuve, à un niveau compris entre le tiers et les deux tiers de la hauteur de cette partie conique, la longueur des bras étant telle qu'ils frolent, sans risque de la toucher, la paroi du fond conique de la cuve, caractérisé en ce qu'au moins une partie des bras (16) de l'agitateur (13) ont une disposition inclinée par rapport à l'axe de leur moyeu support (14), de manière à former avec cet axe un angle ($\alpha$) inférieur à 90°.

2. - Transporteur selon la revendication 1, caractérisé en ce que les bras (16) sont tous inclinés dans le même sens, de manière à constituer un agitateur (13) asymétrique.

3. - Transporteur selon la revendication 1, caractérisé en ce que les bras (16) possèdent des inclinaisons dirigées soit dans un sens, soit dans l'autre, de manière à constituer un agitateur (13) symétrique.

4. - Transporteur selon la revendication 3, caractérisé en ce que tous les bras inclinés (16) sont tournés vers le centre de la cuve (2).

5. - Transporteur selon la revendication 3, caractérisé en ce que tous les bras inclinés (16) sont tournés vers l'extérieur de la cuve (2).

6. - Transporteur selon l'une quelconque des revendi-

0055193

- 8 -

cations 1 à 4, caractérisé en ce que l'inclinaison des
bras (16), et notamment des bras les plus proches de la
paroi du fond conique (3) de la cuve (2), correspond
sensiblement à l'inclinaison de cette paroi conique.

FIG. 1

FIG. 2

0055193

0055193

FİG.3

FİG.4